# EUROPÄISCHE PATENTANMELDUNG

(11) **EP 3 081 529 A1**
(43) Veröffentlichungstag der Anmeldung: **19.10.2016**
(21) Anmeldenummer: 15187822.0
(22) Anmeldetag: 01.10.2015
(51) Int. Cl.: C01B 3/04, C01B 3/22

(54) **VERFAHREN ZUR FREISETZUNG VON WASSERSTOFF AUS DEM ADDUKT VON AMMONIAK UND BORAN SOWIE VERWENDUNG VON ÜBERGANGSMETALLFREIEN KATALYSATOREN ZUR FREISETZUNG VON WASSERSTOFF AUS DEM ADDUKT VON AMMONIAK UND BORAN**

(30) Priorität: 17.04.2015 EP 15163952
(71) Anmelder: Justus-Liebig-Universität Gießen, 35390 Gießen (DE)
(72) Erfinder: Wegner, Hermann A., 35392 Gießen (DE); Lu, Zhenpin, 35392 Gießen (DE)
(74) Vertreter: Stumpf, Peter

(57) **Zusammenfassung**

Die Erfindung umfasst die Verwendung von übergangsmetallfreien, mindestens ein Bor-Atom enthaltenden Lewissäuren, beispielsweise der allgemeinen Formeln (I), (II) und (III), als Katalysatoren bei der thermischen Freisetzung von Wasserstoff aus Wasserstoffspeichersubstanzen, insbesondere Aminoboran, sowie ein System zur reversiblen Speicherung von Wasserstoff, dessen Wasserstofffreisetzungsrate einfach durch Temperaturvariation gesteuert werden kann, ohne dass dabei Speichersubstanz und Freisetzungskatalysator für die Unterbrechung der Freisetzung getrennt werden müssen.

## Beschreibung

### Technisches Gebiet der Erfindung

Die Erfindung bezieht sich auf ein Verfahren zur Freisetzung von Wasserstoff aus dem Addukt von Ammoniak und Boran (im folgenden als "Aminoboran", bzw. "Amminboran" bezeichnet) sowie dessen Anwendung bei der Verwendung von Aminoboran/Amminboran zur Speicherung von Wasserstoff. Die Begriffe "Amino-boran" und "Amminboran" werden im weiteren synonym verwendet.

### Stand der Technik

Im Zuge des Umbaus der klassischen fossilbasierten Energiewirtschaft zu einer nachhaltigen auf regenerativen Energieformen basierenden Energiewirtschaft kommt Wasserstoff als Energieträger eine bedeutende Rolle zu. Dabei stellt die Speicherung von Wasserstoff im Rahmen der sogenannten Wasserstoffwirtschaft einen zentralen, optimierungsbedürftigen Aspekt dar. Aminoboran/Amminboran (NH₃BH₃) ist infolge seines hohen Gehalts an Wasserstoff von 19,6 Gew.-% ein für die Speicherung von Wasserstoff sehr geeignetes Material.

Nachteilig ist, dass die thermische Abspaltung von Wasserstoff aus Aminoboran an sich recht langsam ist, erst ab ca. 60-80 °C einsetzt und nur bei deutlich höherer Temperatur mit akzeptabler Geschwindigkeit abläuft. Im Stand der Technik sind daher bereits zahlreiche Katalysatorsubstanzen bekannt, die jedoch oftmals schwermetallhaltig sind. Die Verwendung schwermetallhaltiger Katalysatorsysteme ist insbesondere in mobilen Systemen unter toxikologischen Aspekten als sehr nachteilig anzusehen. In der Anmeldeschrift US 2007/0151153 A1 wird beispielsweise die Verwendung schwermetallhaltiger Katalysatoren beschrieben, insbesondere solche enthaltend Platin, Palladium, Nickel, Kobalt und Rhodium. Weiterhin werden Katalysatoren beschrieben, die - basierend auf anorganischen oxidischen Trägermaterialien - Elemente aus den Gruppen 8, 9, 10 und 11 des Periodensystems (Periodisches System der Elemente) enthalten. Bei einigen der benannten katalytisch aktiven Elemente handelt es sich zudem um Edelmetalle, so dass deren Verwendung in größerem Umfange auch mit erheblichen Materialkosten verbunden ist. Weiterhin wird auch die Verwendung von sauren Festkörpern wie zum Beispiel sauren Zeolithen sowie Polymeren mit Sulfonsäuregruppen genannt, bzw. allgemein im Reaktionsmedium nicht lösliche Br⌀nsted und/oder Lewissäuren. Alle in dieser Schrift genannten Katalysatoren werden zudem in Gegenwart von Wasser eingesetzt, was zu unerwünschter Korrosion führen kann. Es ist daher bei ihrer Anwendung notwendig, kostenintensive Sondermaterialien für den Bau der Wasserstoff-Speicheranlage zu verwenden. In der US 2007/0151153 A1 werden keinerlei Elemente der Gruppe 3 des Periodensystems genannt, und es werden ebenfalls keinerlei lösliche Lewissäuren beansprucht.

In der Anmeldeschrift US 2012/0201744 A1 wird die Verwendung von bifunktionalen Katalysatoren zur Dehydrogenierung von Aminoboran beschrieben. Offenbart werden ausschließlich übergangsmetallhaltige, insbesondere rutheniumhaltige, Katalysatoren. Es wird zwar Bor explizit als Bestandteil der offenbarten Katalysatoren benannt, jedoch stets nur als weiterer Teil des Komplexes in Ergänzung zu dem zentralen Übergangsmetall. Die in US 2012/0201744 A1 beschriebenen bidentaten Katalysatoren sind zwar teilweise borhaltig, weisen jedoch nach wie vor als zentrales katalytisch aktives Metallion ein Schwermetall-Kation auf. Es können maximal 2,2 mol Wasserstoff pro mol Aminoboran freigesetzt werden, bei Verwendung des borhaltigen Katalysators. Der borfreie Katalysator gestattet die Freisetzung von 2,0 mol Wasserstoff pro mol Aminoboran. (jeweils bei 5mol-% Katalysator).

Es gibt in dieser Offenlegungsschrift keinen eindeutigen Hinweis darauf, dass das im Katalysator enthaltene Bor an dem Katalysemechanismus beteiligt ist. Es wird vielmehr wiederholt die zentrale Rolle des Übergangsmetalls für den Katalysemechanismus betont, so zum Beispiel in Absatz [0073] und Absatz [0075], so dass dem Fachmann die Verwendung schwermetallfreier Katalysatoren in keiner Weise nahegelegt wird. In Absatz [0076] wird zwar die Möglichkeit einer B-O-B-Brücke im Rahmen der Diskussion eines dinuklearen (Ru₂) Übergangsmetall-Intermediates erwähnt, jedoch wird dabei keine Beteiligung der Boratome am katalytischen Prozess nahegelegt. Die B-O-B-Brücke wird lediglich als verknüpfendes Molekülsegment im Rahmen des diskutierten katalytisch aktiven zweikernigen Übergangsmetallkomplexes beschrieben.

In Absatz [0077] wird ein bifunktionaler Übergangszustand diskutiert, ohne diesen jedoch näher zu beschreiben. Basierend auf den Ausführungen zu Formel 2, in der ein bifunktionaler Rutheniumkomplex beschrieben wird und den Ausführungen in Absatz [0076] bezüglich des verbrückenden B-O-B-Elementes ist es für den Fachmann naheliegend, dass es sich bei dem bifunktionalen Übergangszustand um einen Übergangszustand handelt, dessen zwei funktionale Zentren Ru-Atome sind.

In Absatz [0079] wird die mögliche Rolle von Bor als Lewissäure untersucht, wobei festgestellt wird, dass die Belegung der Brücken-Koordinationsstelle zwischen Bor und Ruthenium einen wichtigen Einfluss auf die Dehydrogenierungsreaktion hat. Die Ergebnisse der Geschwindigkeitsmessungen zeigen, dass Verbindung 14, in der das Bor-Atom weiter von dem katalytisch aktiven Übergangsmetall entfernt ist, eine doppelt so hohe Geschwindigkeitskonstante hat wie Verbindung 3, bei der das Bor-Atom nur über ein Sauerstoffatom mit dem Ru-Atom verbunden ist. Das Bor-Atom fungiert hier also nicht als katalytisch aktive Spezies, sondern lediglich als Bestandteil des Brückensegmentes im Katalysatormolekül, wodurch die räumliche Umgebung des katalytisch aktiven Ruthenium-Atoms beeinflusst wird.

In den Absätzen [0080] und [0081] wird zwar die Beteiligung des Bor-Atoms am katalytischen Prozess thematisiert, aber konsequent nur in Verbindung mit dem Ruthenium-Atom. Das Ruthenium als bekanntermaßen katalytisch hoch aktives Übergangsmetall (fähig zur Insertion in Bindungen, z.B. H-H-Bindungen, Katalyse von Redoxprozessen, z.B. reduktive Eliminierungen) wird in Übereinstimmung mit dem Stand der Technik als das eigentlich katalytisch aktive Zentrum offenbart. Katalytische Aktivitäten wie sie Ruthenium aufweist, sind im Stand der Technik von Bor nicht bekannt. Dem Fachmann wird somit nicht nahegelegt, dass zweikernige reine Borverbindungen katalytische Aktivität aufweisen könnten.

Uhl et al. berichten in Angew. Chem. Int. Ed., 2013, 52, 4256-4259 über die Verwendung von frustrierten Lewispaaren für die Freisetzung von Wasserstoff aus Aminoboran. Es handelt sich um bidentate, frustrierte Lewispaare auf Basis von Phosphor und Aluminium. Diese Umsetzung erfordert aber den Einsatz äquimolarer Mengen der frustrierten Lewispaare; die Verwendung katalytischer Mengen ist nicht möglich.

D. A. Dixon et al. beschreiben (Angew. Chem. Int. Ed. 2007, 46, 746-749) die Verwendung des übergangsmetallfreien, borhaltigen Katalysators tris-(Pentafluorophenyl)-boran (B(C₆F₅)₃) zur Freisetzung von Wasserstoff aus Aminoboran. Es handelt sich um eine einkernige, also ein Bor-Atom enthaltende, Lewissäure. In dem in dieser Schrift offenbarten einkernigen Katalysator befindet sich das Fluor in den organischen Resten (-C₆F₅); es ist nicht direkt an das Bor-Atom gebunden. Die Herstellung derartiger fluorhaltiger Verbindungen ist aufwendig und damit kostspielig. Die Verwendung bidentater borhaltiger Lewissäuren wird nicht offenbart.

In der Offenlegungsschrift US 2006/0292068 A1 wird ebenfalls die Verwendung von Lewissäuren als Katalysatoren offenbart, wobei aber auch hier lediglich einkernige Lewissäuren genannt werden, und die Verwendung bidentater Lewissäuren in keiner Weise nahegelegt wird. Auch bei den in dieser Schrift offenbarten einkernigen borhaltigen Katalysatoren handelt es sich überwiegend um fluorhaltige Verbindungen, bei denen sich die Fluor-Atome in den organischen Resten befinden.

In Bezug auf den Artikel von Dixon et al. sowie der Offenlegungsschrift US 2006/0292068 A1 wurden eigene Vergleichsversuche durchgeführt, die gezeigt haben, dass unter vergleichbaren Bedingungen mit der erfindungsgemäßen Verwendung bidentater übergangsmetallfreier Katalysatoren eine deutlich effektivere Freisetzung von Wasserstoff erreicht werden kann als mit den im Stand der Technik bekannten einkernigen übergangsmetallfreien Katalysatoren. Diese eigenen Versuche mit dem einkernigen übergangsmetallfreien Katalysator B(C₆F₅)₃ führen den Fachmann ebenfalls weg von der Verwendung zweikerniger übergangsmetallfreier Verindungen, da die gefundenen Werte deutlich unter den in US 2012/0201744 A1 offenbarten Werten liegen, und die aus US 2012/0201744 A1 ersichtliche Verbesserung durch das Bor-Atom nur 0,2 Äquivalente Wasserstoff beträgt, gegenüber der bor-freien Variante. Analoge Ergebnisse wurden auch mit erfindungsgemäßen einkernigen borhaltigen katalytisch aktiven Substanzen erhalten.

### Aufgabe

Aufgabe der Erfindung ist es, ein Verfahren und Katalysatoren (bzw. katalytisch aktive Substanzen) für die Reaktion der thermischen Freisetzung von Wasserstoff aus Aminoboran zur Verfügung zu stellen, die effektiver und/oder kostengünstiger sind als im Stand der Technik für diesen Zweck bekannte Verfahren und Katalysatoren. Die Begriffe "Katalysator" und "katalytisch aktive Substanz" werden im Rahmen dieser Offenbarung synonym verwendet. Die Erfindung beinhaltet die Verwendung von an sich für die Durchführung anderer Reaktionen bereits bekannter Katalysatoren speziell für die Freisetzung von Wasserstoff aus Aminoboran und substituierten Aminoboranen. Weiterhin beinhaltet die Erfindung ein Verfahren für die Freisetzung von Wasserstoff aus substituiertem und unsubstituiertem Aminoboran, das auf der Verwendung der erfindungsgemäßen katalytisch aktiven Substanzen beruht.

Diese Aufgabe wird durch die erfindungsgemäße Verwendung von mit den kennzeichnenden Merkmalen des unabhängigen Anspruchs 1 beschriebenen Verbindungen sowie dem im unabhängigen Anspruch 16 beschriebenen Verfahren gelöst. Die abhängigen Ansprüche zeigen weitere vorteilhafte Varianten der erfindungsgemäßen Verwendungen. Die Erfindung umfasst auch alle sinnvollen und insbesondere alle erwähnten Kombinationen von unabhängigen und/oder abhängigen Ansprüchen.

### Beschreibung

Die vorliegende Erfindung umfasst die Verwendung von Substanzen, die mindestens ein Bor-Atom enthalten, wobei die mindestens ein Bor-Atom enthaltenden Substanzen monodentate und bidentate Substanzen umfassen, als katalytisch aktive Substanzen bei der thermischen Freisetzung von Wasserstoff aus Wasserstoffspeichersubstanzen, wobei das mindestens eine Bor-Atom mindestens eine direkte kovalente oder nicht-kovalente Bindung zu mindestens einem Substituenten bzw. Rest R aufweist, der gegenüber dem mindestens einen Bor-Atom elektronenziehend wirkt und dadurch die Lewis-Acidität des mindestens einen Bor-Atoms verstärkt. Der mindestens eine Substituent R ist unabhängig ausgewählt aus der Liste umfassend H, F, Cl, Br, J, -CN, -OCN, -SCN, -OEt -OMe, -C₆F₅, -OCX₃, -CX₃, -C₂X₅, -C₃X₇, -C₆X₄CX₃, -C₆X₃(CX₃)₂, -C₆X₂(CX₃)₃, wobei X unabhängig voneinander ausgewählt ist aus der Liste umfassend H, F, Cl, Br, J, -CN, -OCN, -SCN, -OC₂Y₅, -OCY₃ und Y wiederum unabhängig voneinander ausgewählt ist aus der Liste umfassend H, F, Cl, Br, J, -CN, -OCN. Für die Definition des Begriffs "elektronenziehend gegenüber Bor-Atomen" wird im Rahmen der vorliegenden Offenbarung auf das dem Fachmann bekannte, von Linus Pauling eingeführte Prinzip der Elektronegativität zurückgegriffen. Es beschreibt die Stärke, mit der Atome Elektronen an sich binden können. Es wurden mehrere Skalen entwickelt (die "Allred-Rochow-Skala", die "Mulliken-Skala" und die "Pauling-Skala"), die es gestatten, jeder Atomsorte einen Zahlenwert zuzuordnen, so dass Atome unterschiedlicher Elemente in Ihrer Stärke, Elektronen an sich zu binden, miteinander verglichen werden können. Für die Beurteilung des elektronenziehenden Effekts der Substituenten bzw. Reste R, R₂, R₂', R₃, R₃', Rₐ, R_{b} und R_{c} wird im Rahmen der vorliegenden Erfindung die Pauling-Skala verwendet. Um einen gegenüber Bor-Atomen elektronenziehenden Rest handelt es sich demzufolge, wenn
- im Falle eines einatomigen Restes der Elektronegativitätswert des Atoms größer als derjenige von Bor ist, also im Bereich von 2,0 bis 4,0 liegt, insbesondere, wenn er zwischen 2,1 und 3,8 liegt,
- im Falle von mehratomigen Resten,
   a) der Rest über ein Atom, bei dem es sich nicht um ein Kohlenstoff-Atom handelt, mit dem Bor-Atom verknüpft ist, der Elektronegativitätswert dieses Atoms, über das der Rest mit dem Bor-Atom verknüpft ist, größer als derjenige von Bor ist, also im Bereich von 2,0 bis 4,0 liegt, insbesondere, wenn er zwischen 2,3 und 3,8 liegt, und
   b) der Rest über ein Kohlenstoff-Atom mit dem Bor-Atom verknüpft ist, und das betreffende verknüpfende Kohlenstoff-Atom oder mindestens ein weiteres kovalent daran gebundenes Nachbar-Kohlenstoffatom, mit mindestens einem Atom verknüpft ist, dessen Elektronegativitätswert größer als derjenige von Kohlenstoff ist, also im Bereich von 2,5 bis 4,0 liegt, insbesondere wenn er zwischen 2,6 und 3,8 liegt.

Die vorliegende Erfindung umfasst insbesondere die Verwendung von mono- oder bidentaten Substanzen der allgemeinen Formeln (I), (II) und (III) 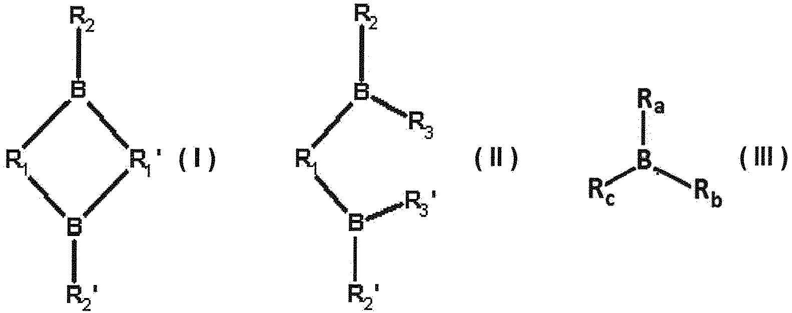 als katalytisch aktive Substanzen bei der thermischen Freisetzung von Wasserstoff aus Wasserstoffspeichersubstanzen, wobei es sich bei R₂ und R₂' um zwei gleiche oder verschiedene Reste handelt, die gegenüber den Bor-Atomen elektronenziehend wirken und dadurch die Lewis-Acidität der Bor-Atome unterstützen, und R₁ und R₁' zwei gleiche oder verschiedene bifunktionale organische Reste sind, die die beiden Bor-Atome überbrückend miteinander verbinden. Bei den beiden Resten R₃ und R₃' handelt es sich ebenfalls um zwei gleiche oder verschiedene Reste, die gegenüber den Bor-Atomen elektronenziehend wirken und dadurch ebenfalls die Lewis-Acidität der Bor-Atome unterstützen. "Unterstützen" bedeutet hierbei im Rahmen dieser Offenbarung eine Verstärkung der Lewis-Acidität. Bei den Resten Rₐ, R_{b} und R_{c} handelt es sich um Reste, die unabhängig voneinander ausgewählt werden aus der Liste umfassend H, F, Cl, Br, J, -CN, -OCN, -SCN, -OEt, -OMe, -SEt, -SMe, -CH₃, -C₂H₅, -C₃H₇, -C₆H₅, -C₆F₅, -OCX₃, -CX₃, -C₂X₅, -C₃X₇, -C₆X₄CX₃, -C₆X₃(CX₃)₂, und -C₆X₂(CX₃)₃, wobei X unabhängig von-einander ausgewählt ist aus der Liste umfassend H, F, Cl, Br, J, -CN, -OCN, -OC₂Y₅ und -OCY₃, und Y wiederum unabhängig voneinander ausgewählt ist aus der Liste umfassend H, F, Cl, Br, J, -CN, und -OCN, wobei es sich bei mindestens einem der Reste Rₐ, R_{b} und R_{c} um einen gegenüber Bor-Atomen elektronenziehenden Rest entsprechend Rest R₂ oder um Wasserstoff (H) handelt.

Aus dem vorstehend gesagten ist ersichtlich, dass es sich bei den Resten Rₐ, R_{b} und R_{c} sowohl um einen gemäß obenstehender Definition elektronenziehenden Substituenten R handeln kann, als auch um einen nicht elektronenziehenden.

"Bidentat" bedeutet im Rahmen der vorliegenden Offenbarung, dass zwei Atome eines Elementes, insbesondere von Bor, die als Lewissäure-Zentren fungieren, durch die beiden molekularen Brücken R₁ und R₁' in einem geeigneten Abstand voneinander fixiert sind, so dass sie gleichzeitig mit jeweils einem Substratmolekül wechselwirken. Die genaue Art der Wechselwirkung ist nicht bekannt; insbesondere ist nicht bekannt, ob es sich dabei konkret um die Bildung zweier chemischer Bindungen vom Katalysator zum Substrat handelt, oder ob vielmehr das erste Bor-Atom infolge der günstigen Positionierung den Bindungsvorgang des zweiten Bor-Atoms an das Substrat, also beispielsweise das Amminboran, unterstützt. Entsprechend bedeutet "monodentat", dass eine katalytisch aktive Substanz nur jeweils ein Atom eines Elements, insbesondere nur ein Bor-Atom enthält, das mit einem Substratmolekül wechselwirkt. Synonym werden im Rahmen der vorliegenden Offenbarung auch die Begriffe "einkernig" für "monodentat" und "mehrkernig" für "bidentat" verwendet.

Die Reste R₁ und R₁' sind ausgewählt aus der Liste umfassend die bifunktionalen Liganden 1,2-Phenylen, 2,3-Naphthylen und 2,3-Anthrylen, wobei diese Liste nicht einschränkend zu verstehen ist. Es ist für den Fachmann naheliegend, dass an beliebigen weiteren Positionen des Benzol-, Naphthalin- bzw. Anthracen-Grundgerüstes beliebig substituierte Liganden R₁/R₁' in den Umfang der Erfindung fallen, sofern sie in ihren elektronischen und sterischen Eigenschaften denen der konkret untersuchten Ausführungsbeispiele ähnlich sind.

Die Reste R₂, R₂', R₃ und R₃' sind ausgewählt aus der Liste umfassend die elektronenziehenden Substituenten F, Cl, Br, J, CN, OCN, SCN, OEt, OMe, SEt und SMe, sowie H, -CH₃, -C₂H₅, -C₃H₇, -C₆H₅, -C₆F₅, -OCX₃, -CX₃, -C₂X₅, -C₃X₇, -C₆X₄CX₃, -C₆X₃(CX₃)₂, und -C₆X₂(CX₃)₃, wobei X unabhängig voneinander ausgewählt ist aus der Liste umfassend H, F, Cl, Br, J, -CN, -OCN, -OC₂Y₅ und -OCY₃, und Y wiederum unabhängig voneinander ausgewählt ist aus der Liste umfassend H, F, Cl, Br, J, CN, und OCN, wobei diese Listen nicht einschränkend zu verstehen sind. Es ist für den Fachmann naheliegend, dass weitere Substituenten mit elektronenziehenden Eigenschaften gegenüber den Bor-Atomen ebenfalls in den Umfang der Erfindung fallen.

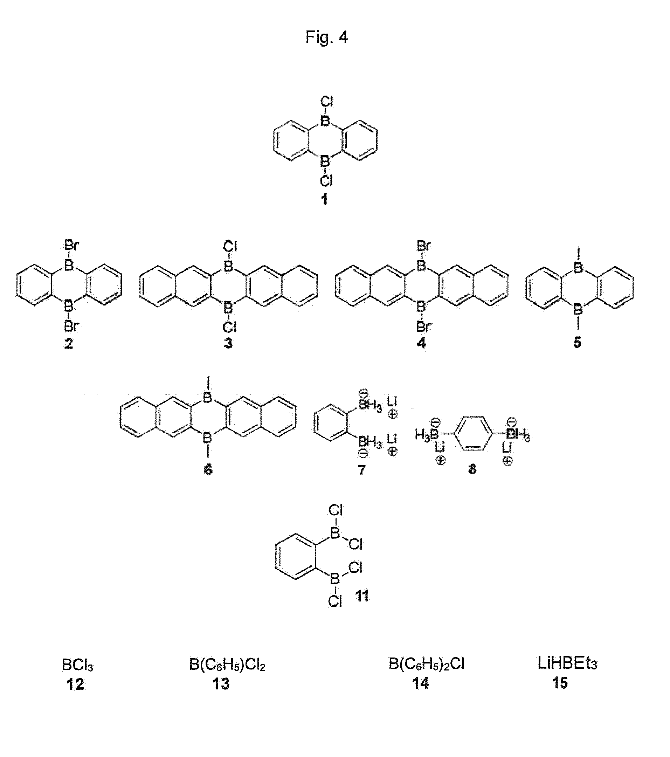

Beispiele für erfindungsgemäße Substanzen sind in Fig. 4 angegeben.

Besonders bevorzugt ist die Verwendung der erfindungsgemäßen katalytisch aktiven Substanzen bei der Freisetzung von Wasserstoff aus Aminoboran (NH₃BH₃), sowie substituierten Aminoboranen, wobei es sich bei den substituierten Aminoboranen bevorzugt um Methylaminoboran, Dimethylaminoboran, Ethylaminoboran, Diethylaminoboran und Methylethylaminoboran handelt. Die vorstehende Liste ist nicht einschränkend zu verstehen. Es ist für den Fachmann naheliegend, dass weitere substituierte Aminoborane, deren Gehalt an katalytisch abspaltbarem Wasserstoff nicht zu gering ist, um von wirtschaftlichem Interesse zu sein, ebenfalls in den Umfang der Erfindung fallen.

Es ist im Stand der Technik bekannt, dass die thermische Freisetzung von Wasserstoff aus Aminoboran durch Übergangs- bzw. Schwermetall-Verbindungen sowie Verbindungen, die jeweils ein Bor-Atom enthalten, katalysiert werden kann. Auch die katalytische Aktivität von Übergangsmetall-Komplexen, die zusätzlich ein Bor-Atom enthalten, ist bereits bekannt. Es gibt jedoch im Stand der Technik keinen Hinweis, der es dem Fachmann nahelegt, dass bidentate übergangsmetallfreie Verbindungen katalytische Aktivität bei der Freisetzung von Wasserstoff aus Aminoboran aufweisen könnten.

Überraschenderweise wurde gefunden, dass übergangsmetallfreie Verbindungen, die mindestens zwei Bor-Atome enthalten, die Freisetzung von Wasserstoff aus Aminoboran sehr effektiv katalysieren. Der genaue katalytische Mechanismus, durch den diese bidentaten Lewissäuren die Wasserstofffreisetzung katalysieren, ist noch nicht bekannt. Ohne an eine Theorie gebunden zu sein, kann jedoch vermutet werden, dass die Eigenschaften der bidentaten Borverbindungen, als Lewissäuren zu fungieren, für die katalytische Aktivität relevant sind. Das wird durch die sehr schlechten katalytischen Eigenschaften von Verbindung **7** nahegelegt, bei der es sich um eine konjugierte Base der entsprechenden bidentaten Lewissäure handelt. Auch die geringeren Umsätze bei Verwendung der methylsubstituierten Verbindungen **5** und **6** deuten darauf hin, dass die Abnahme der Lewis-Acidität zu dem Verlust der katalytischen Aktivität beiträgt. Haupt-Reaktionsprodukt der katalytischen Umsetzung ist Borazin, was durch ¹¹B-NMR-Spektroskopie nachgewiesen wurde.

Weiterhin wurde darüber hinaus ebenfalls überraschenderweise gefunden, dass auch einkernige borhaltige Substanzen, die mindestens einen elektronenziehenden Substituenten in direkter Bindung am Bor-Atom enthalten, deutlich bessere katalytische Eigenschaften aufweisen als die im Stand der Technik bereits bekannten einkernigen borhaltigen Katalysatoren. Dies wird - ohne an eine Theorie gebunden zu sein - darauf zurückgeführt, dass die im Stand der Technik bereits bekannten einkernigen Katalysatoren entweder keine direkt an das Bor-Atom gebundenen elektronenziehenden Reste tragen (wie beispielsweise B(C₆F₅)₃ oder aber die direkt am Bor gebundenen elektronenziehenden Reste durch Komplexierung mit beispielsweise Lösungsmittelmolekülen in ihrer Wirkung abgeschwächt werden, wie es beispielsweise bei der in der Offenlegungsschrift US 2006/0292068 A1 offenbarten Verbindung BF₃O(Et)₂ der Fall ist.

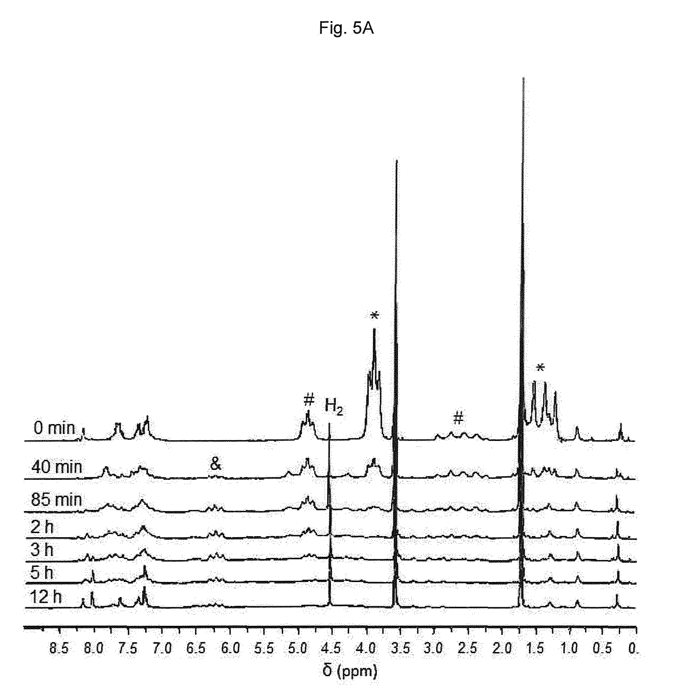

Darüber hinaus zeigen die nachfolgend offenbarten Untersuchungen zum Mechanismus der katalytischen Aktivität der erfindungsgemäßen Substanzen, dass es ebenfalls erfindungswesentlich ist, dass mindestens einer der Substituenten hydridischer Natur ist, oder durch solch einen Substituent ersetzt werden kann, so dass sich in einem ersten Schritt im Rahmen der Umsetzung die eigentlich aktive Form des Katalysators bildet, bei der ein Substituent am katalytisch aktiven Bor-Atom durch ein Wasserstoffatom aus der Wasserstoffspeichersubstanz ersetzt ist (vgl. Fig. 5 A - infolge dieses Vorgangs entsteht nachweislich beispielsweise Ammonium-monochlorboran, NH₃BH₂Cl). Die Unterschiede der erfindungsgemäß einsetzbaren Substituenten bzw. Reste am Bor-Atom hinsichtlich ihrer Fähigkeit, als Abgangsgruppe zu fungieren, stellt daher einen weiteren wesentlichen Parameter dar, der zu Abstufungen hinsichtlich der katalytischen Aktivität führt. Am Beispiel der Halogene sei dies erläutert: Die Neigung der Halogene, in chemischen Reaktionen als Abgangsgruppe zu fungieren steigt von Fluor über Chlor und Brom zu Jod hin an. Deshalb weisen beispielsweise chlorhaltige katalytisch aktive Substanzen bessere katalytische Eigenschaften auf als fluorhaltige, da Chlor eine bessere Abgangsgruppe darstellt als Fluor, und sich daher die aktive Form der katalytisch aktiven Substanz, in der ein Substituent bzw. Rest gegen ein Wasserstoffatom ausgetauscht ist, leichter bildet.

Zur Untersuchung des der katalytischen Reaktion zugrundeliegenden Mechanismus wurden beispielhaft die nachfolgend beschriebenen mechanistischen Untersuchungen an der Umsetzung von Aminoboran mit Katalysator 1 durchgeführt. Es ist für den Fachmann leicht ersichtlich, dass die dabei gewonnenen Ergebnisse in analoger Weise auch für die weiteren erfindungsgemäßen Anwendungen anderer katalytisch aktiver Substanzen im Rahmen der Erfindung gelten.

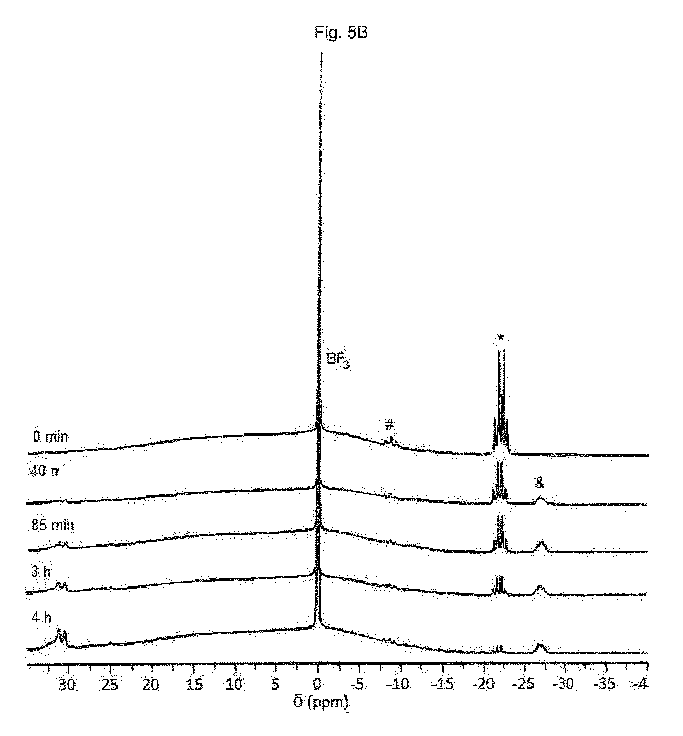

Bei der Umsetzung von einem Äquivalent **1** mit drei Äquivalenten Aminoboran in THF-d₈, bzw. 20 Äquivalenten Aminoboran in THF/Diglyme bildet sich in einem ersten Schritt Ammoniummonochlorboran NH₃BH₂Cl, was NMR-spektroskopisch nachgewiesen wurde (vgl. Fig. 5A, ¹H-NMR: δ = 4,84 ppm für NH₂ und Fig. 5B, ¹¹B-NMR: δ = -8,64 ppm für BH₂Cl).

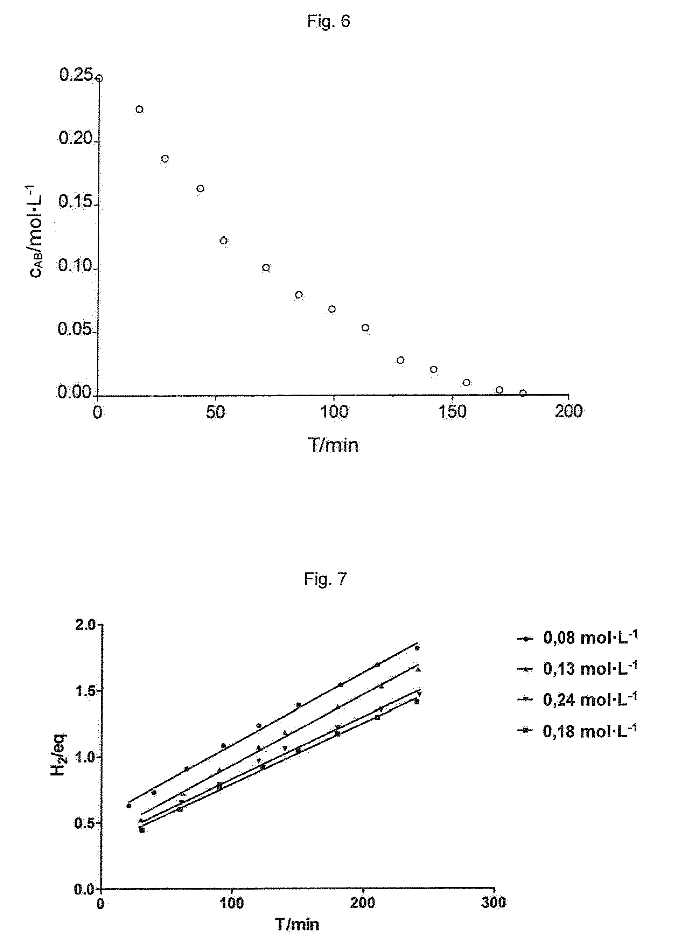

Zur Untersuchung der Kinetik der Freisetzung von Wasserstoff unter der Katalyse von schwermetallfreien bidentaten Bor-Verbindungen wurde der Abbau von Aminoboran in Gegenwart von Katalysator **1** mittels ¹¹B-NMR-Spektroskopie verfolgt (vgl. Fig. 6). Der Zerfall des Aminoborans erfolgt zunächst - bis zu einem Umsatz von ca. 50 % der ursprünglich eingesetzten Menge Aminoboran nach ca. 70 Minuten - recht schnell. Danach verlangsamt sich die Abbaurate des Aminoborans. Für die durch **1** katalysierte Umsetzung von Aminoboran wurde für die Geschwindigkeitskonstante des ersten Reaktionsabschnittes (bis zu ca. 60 % Umsetzung) ein Wert von etwa (3,7±0,1) · 10⁻⁵ mol·s⁻¹ gemessen.

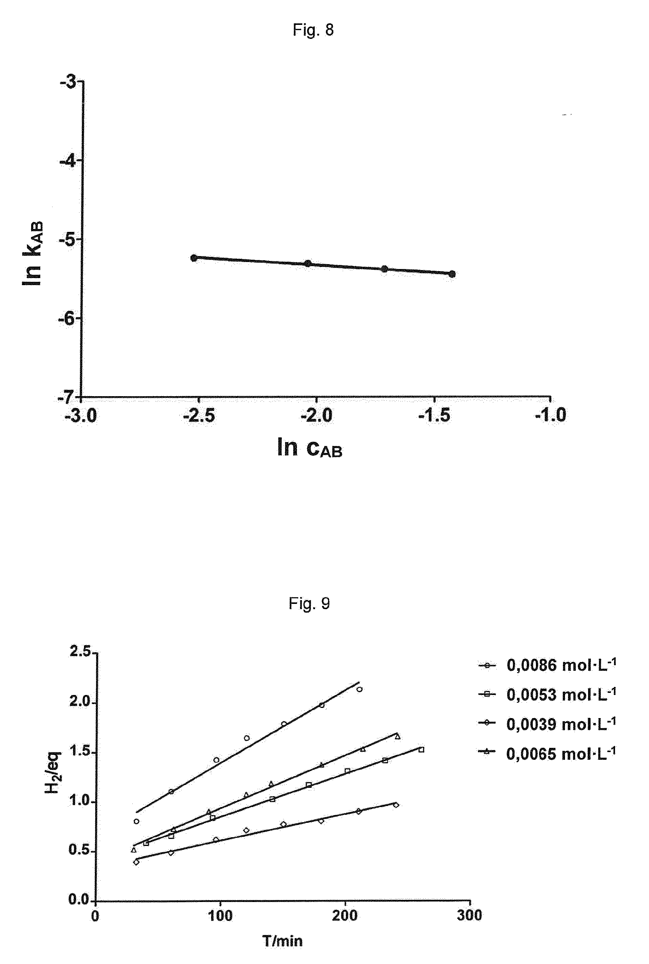

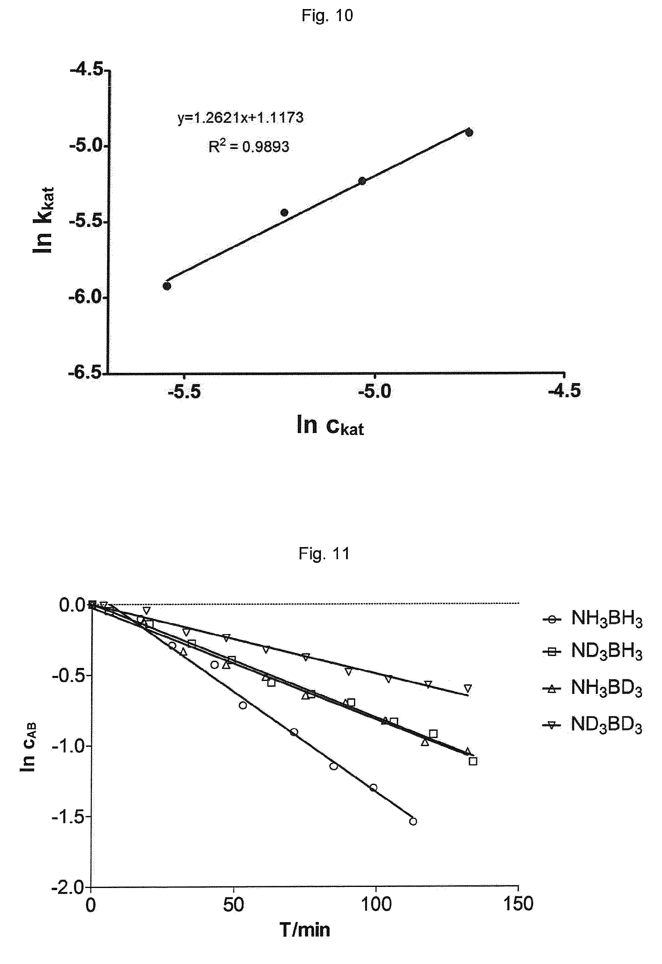

Durch Messung der Gasentwicklung bei der Umsetzung von variablen Konzentrationen Aminoboran (0,08 mol·L⁻¹ bis 0,25 mol·L⁻¹) bei konstanter Konzentration von Katalysator **1** von 0,0065 mol·L⁻¹ wurde die Abhängigkeit der Wasserstofffreisetzung von der Substratkonzentration ermittelt (Fig. 7). Die so gewonnenen experimentellen Daten zeigen, dass die Gesamtrate der Wasserstofffreisetzung konstant ist (Fig. 8), was darauf hindeutet, dass die Reaktion nicht von der Substratkonzentration abhängig ist. Analog wurde die auf den Katalysator bezogene Reaktionsordnung durch Messungen der Reaktionsgeschwindigkeit bei variabler Katalysatorkonzentration von 3,0 bis 6,7 mol-%, bezogen auf die anfängliche Substratmenge bei einer Anfangskonzentration von 0,13 mol·L⁻¹ Aminoboran, bestimmt (Fig. 9). Die Auftragung des natürlichen Logarithmus der so ermittelten Reaktionsgeschwindigkeiten gegen den natürlichen Logarithmus der Katalysatorkonzentration ergibt eine Gerade mit einer Steigung von 1,26 ± 0,09 (Fig. 10). Das heißt, die Freisetzung von Wasserstoff aus Aminoboran in Gegenwart des Katalysators 1 ist erster Ordnung, bezogen auf den Katalysator **1,** und nullter Ordnung, bezogen auf das Substrat Aminoboran.

Durch Messung von kinetischen Isotopeneffekten wurde bestimmt, welche Bindungen in den geschwindigkeitsbestimmenden Schritt involviert sind. Mittels ¹¹B-NMR-Spektroskopie wurde die Umsetzung von Aminoboran (NH₃BH₃) sowie seiner Isotopomere ND₃BH₃, NH₃BD₃ und ND₃BD₃ in Gegenwart von 5 % **1** bei 60 °C verfolgt (Fig. 11). Das Produkt der jeweiligen B/N-teildeuterierten Isotopeneffekte beträgt ca. 3,2 (K_{NH3BH3}/K_{ND3BH3} × K_{NH3BH3}/K_{NH3BD3} = 1.76(3) × 1.78(9) = 3.15(4)). Es entspricht im Rahmen der Meßgenauigkeit dem Isotopeneffekt des vollständig deuterierten Aminoborans von ca. 2,9 (K_{NH3BH3}/K_{ND3BD3} = 2.88(5)). Das deutet darauf hin, dass ein Mechanismus vorliegt, bei dem im geschwindigkeitsbestimmenden Schritt die B-H-Bindungen und die N-H-Bindungen simultan involviert sind.

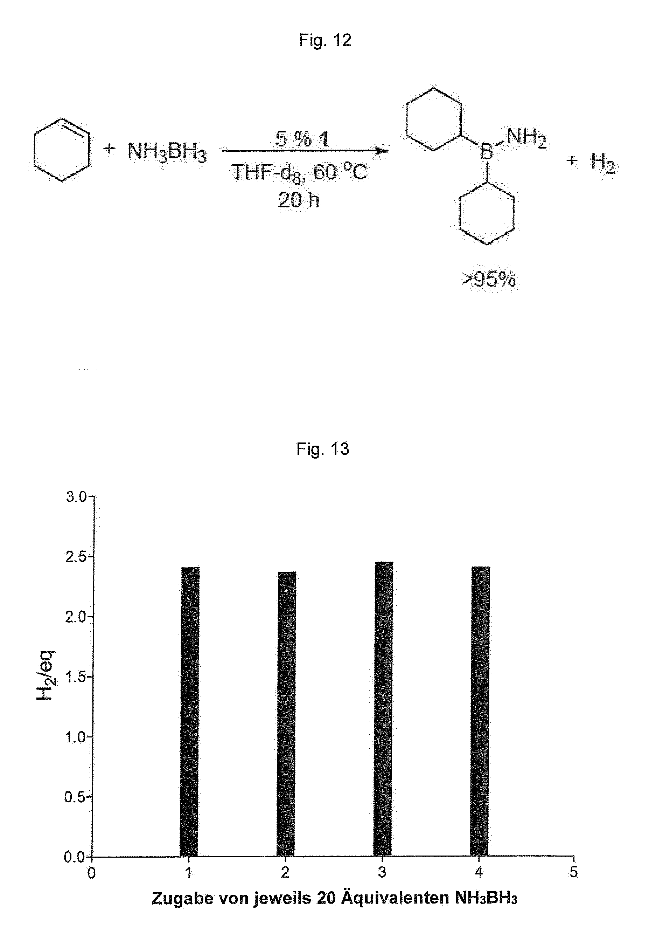

Mittels Umsetzung von Aminoboran mit der katalytisch aktiven Substanz **1** in Gegenwart von Cyclohexen als Abfangreagenz wurde nachgewiesen, dass NH₂=BH₂ als Zwischenprodukt im Zuge der Freisetzung von Wasserstoff aus Aminoboran entsteht (20-stündiges Erhitzen einer 1:1-Mischung von Aminoboran und Cyclohexen in Gegenwart von 5 % **1** in THF-d8, vgl. Fig. 12).

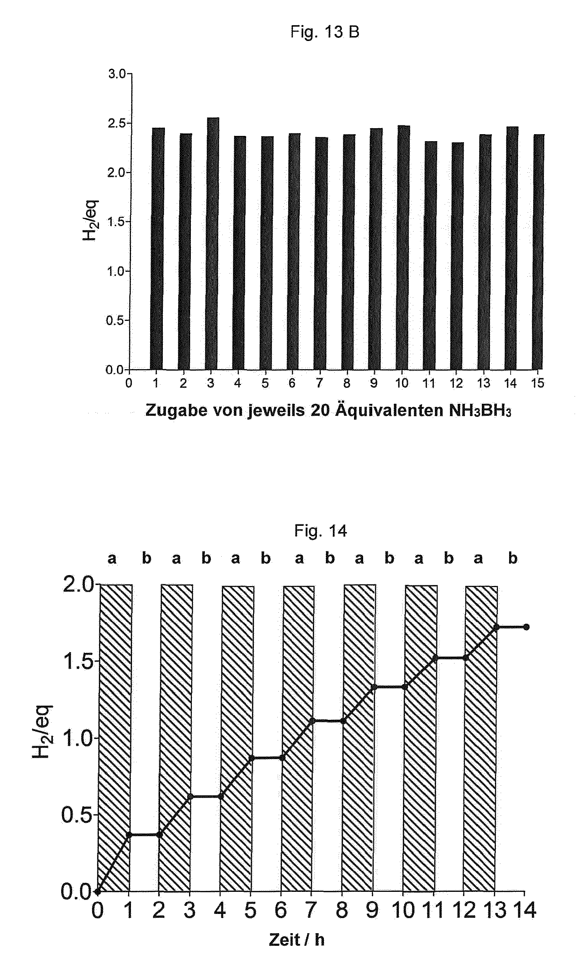

Die mehrfache Einsetzbarkeit der katalytisch aktiven Substanzen ohne erkennbaren Aktivitätsverlust wurde ebenfalls beispielhaft anhand der mehrfachen Umsetzung von **1** mit Aminoboran wie folgt nachgewiesen: Ein Äquivalent (3,2 mg / 0,013 mmol) katalytisch aktiver Substanz **1** wurde bei Raumtemperatur in einem Schlenk-Rohr mit 20 Äquivalenten (8,0 mg / 0,26 mmol) Aminoboran in 2 mL einer THF/Diglyme-Mischung 1:4 vermischt und anschließend 12 h in einem Ölbad bei 60 °C getempert. Die Menge des dabei freigesetzten Wasserstoffs wurde gemessen. Nach Abkühlen wurde diesem Reaktionsansatz eine weitere Portion von 20 Äquivalenten Aminoboran zugegeben und erneut erhitzt sowie die freigesetzte Wasserstoffmenge bestimmt. Dieses Vorgehen wurde mehrmals wiederholt, wobei kein Aktivitätsverlust erkennbar war (vgl. Fig. 13).

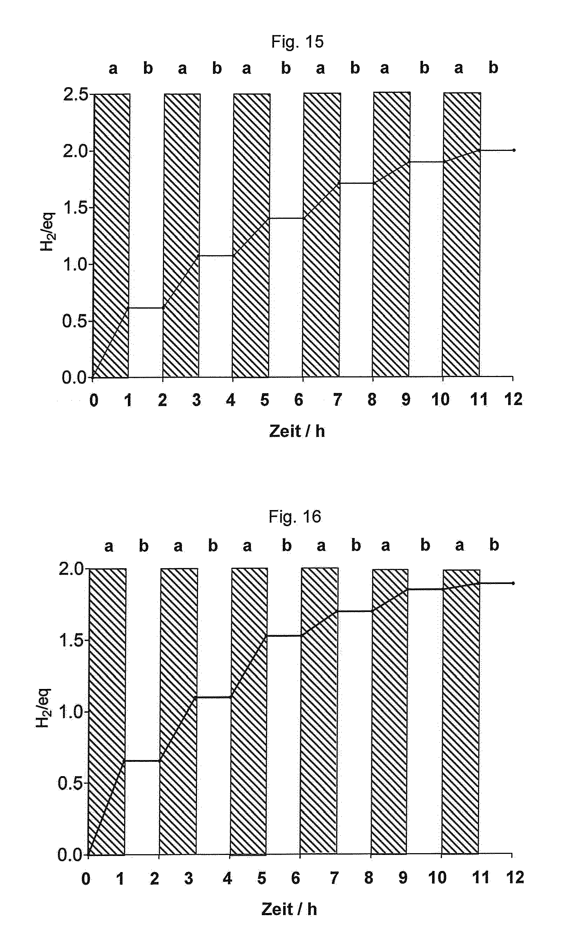

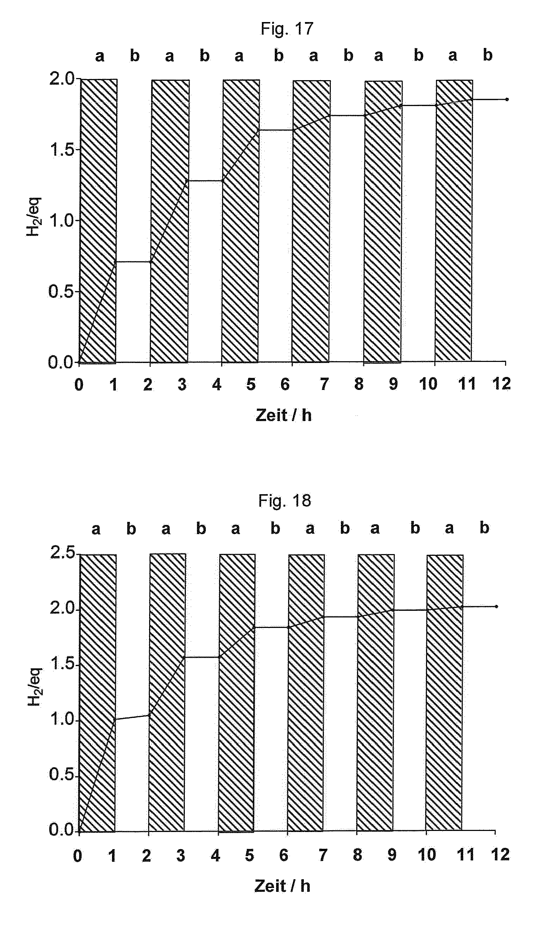

In einem Start/Stop-Experiment wurde weiterhin beispielhaft nachgewiesen, dass sich die Freisetzung von Wasserstoff aus substituiertem oder unsubstituiertem Aminoboran problemlos durch Regelung und/oder Steuerung der Reaktionstemperatur sehr einfach einstellen lässt. Beispielhaft wurde ein wie vorstehend beschriebener Ansatz von **1** mit Aminoboran (3,2 mg / 0,013 mmol **1** und 8,0 mg / 0,26 mmol Aminoboran in 2 mL THF/Diglyme-Mischung 1:4) abwechselnd für jeweils eine Stunde auf 60 °C erhitzt sowie auf Raumtemperatur abgekühlt. Am Ende jeder Temperaturphase wurde die in dieser Temperaturphase freigesetzte Menge Wasserstoff bestimmt. In Fig. 14 ist der so ermittelte Verlauf der Wasserstoff-Freisetzungsrate über die gesamte Versuchsdauer graphisch dargestellt. Man erkennt deutlich, dass bei Raumtemperatur keine Wasserstofffreisetzung erfolgt, bei 60 °C jedoch sehr effektiv Wasserstoff freigesetzt wird. Dieses Experiment wurde mit unterschiedlichen Konzentrationen von Amminboran wiederholt; die jeweiligen Ergebnisse sind aus den Zeichnungen Fig. 15 bis Fig. 18 ersichtlich.

Dieses Verhalten der erfindungsgemäßen katalytisch aktiven Substanzen ist von ganz besonderem Vorteil gegenüber den im Stand der Technik bekannten Katalysatoren bzw. Verfahren. Es stellt insbesondere ein System bzw. Verfahren für die thermische Freisetzung von Wasserstoff aus Wasserstoffspeichersubstanzen dar, das dadurch gekennzeichnet ist, dass mindestens eine katalytisch aktive mono-oder bidentate Substanz in einem geeigneten Lösungsmittel oder Lösungsmittelgemisch in Kontakt mit der mindestens einen Wasserstoffspeichersubstanz gebracht wird, wobei die Freisetzung von Wasserstoff durch Variation der Reaktionstemperatur gesteuert oder geregelt wird, ohne dass für eine Unterbrechung der Wasserstofffreisetzung die katalytisch aktive Substanz von der Wasserstoffspeichersubstanz getrennt werden muss.

Die erfindungsgemäße Verwendung der mono- oder bidentaten übergangsmetallfreien katalytisch aktiven Substanzen stellt somit ein neues Verfahren für die Freisetzung von Wasserstoff aus substituiertem und unsubstituiertem Aminoboran dar und umfasst die folgende generelle Vorgehensweise: Die katalytisch aktive Substanz der allgemeinen Formel (I), (II) oder (III) wird in einem polar-aprotischen Lösungsmittel oder Lösungsmittelgemisch in Kontakt mit Aminoboran, NH₃BH₃, oder einer anderen geeigneten Wasserstoff-Speichersubstanz gebracht, und die so erhaltene Reaktionsmischung auf die gewünschte Reaktionstemperatur erhitzt. Der sich entwickelnde Wasserstoff wird in geeigneter Weise, zum Beispiel durch Abpumpen, ab- und der beabsichtigten Verwendung zugeführt. Zur Unterbrechung der Wasserstofffreisetzung reicht es aus, die Temperatur der Mischung auf Umgebungstemperatur abzusenken. Es ist nicht erforderlich, die katalytisch aktive Substanz, bzw. das katalytisch aktive Substanzgemisch, von der Speichersubstanz zu trennen. Die nicht erhitzte Mischung ist ohne erkennbare Zersetzung bei Umgebungstemperatur lagerfähig.

Es ist für den Fachmann ohne weiteres ersichtlich, dass jedes polar-aprotische Lösungsmittel oder Lösungsmittelgemisch als Reaktionsmedium für die Durchführung verwendet werden kann. Eventuell mitgerissene Lösungsmitteldämpfe von niedrigsiedenden Lösungsmitteln können im Bedarfsfalle zum Beispiel durch Ausfrieren aus dem Wasserstoffstrom entfernt werden. Besonders geeignet sind Lösungsmittel, bzw. Lösungsmittelgemische, die mindestens ein Lösungsmittel enthalten, ausgewählt aus der Liste umfassend die Lösungsmittel Tetrahydrofuran, Diethylenglykoldimethylether, Triethylenglykoldimethylether und 1,4-Dioxan, wobei diese Liste nicht einschränkend zu verstehen ist.

Die erfindungsgemäße Verwendung der katalytisch aktiven Substanzen umfasst insbesondere die Anwendung in Form von Homogenkatalyse, d.h. sowohl die Wasserstoff-Speichersubstanz als auch die katalytisch aktive Verbindung liegen in gelöster Form vor. Es ist für den Fachmann jedoch naheliegend, dass die Verwendung auch in Form von Heterogenkatalyse erfolgen kann. Unter Heterogenkatalyse wird hierbei verstanden, dass mindestens eine der beiden miteinander reagierenden Substanzen im Reaktionsmedium unlöslich oder zumindest schwerlöslich ist, wobei die Schwerlöslichkeit insbesondere im Falle der katalytisch aktiven Substanzen auch dadurch erreicht wird, dass die katalytisch aktive Substanz adsorptiv oder kovalent an die Oberfläche eines geeigneten Trägermaterials gebunden ist. Diese beiden grundsätzlichen Ausführungsvarianten lassen sich mit ihren jeweiligen Untervarianten mit den Begriffen der "Verwendung in einphasigem Reaktionsmedium" (homogenkatalytisch) und der "Verwendung in mehrphasigem Reaktionsmedium" (heterogenkatalytisch) beschreiben.

Die erfindungsgemäße Verwendung der katalytisch aktiven Substanzen kann auf vielfältige Weise und in den unterschiedlichsten Bereichen sowohl in ortsfesten als auch in mobilen Systemen zur Speicherung von Wasserstoff erfolgen.

Bevorzugt ist beispielsweise die Verwendung in mobilen Systemen der Wasserstoffspeicherung für Kraftfahrzeuge. Weiterhin bevorzugt ist auch die Anwendung in ortsfesten Systemen zur Langzeit- oder Kurzzeit-Wasserstoffspeicherung, zum Beispiel, um bei Stromerzeugungsanlagen, die starken witterungsbedingten Produktionsraten unterworfen sind, in Spitzenzeiten anfallende Stromüberschüsse in Form von Wasserstoff zwischenzuspeichern.

Sowohl bei der Anwendung in einem mobilen System zur Wasserstoffspeicherung, als auch bei der Anwendung in einem ortsfesten System, ist es eine besonders bevorzugte Ausführungsform der Erfindung, dass die katalytisch aktive Substanz (bzw. das katalytisch aktive Substanzgemisch), die Wasserstoffspeichersubstanz, und das geeignete Lösungsmittel als fluides Gesamtsystem für die Wasserstoffspeicherung verwendet wird, bei dem es nicht erforderlich ist, für die Regenerierung der Speichersubstanz die katalytisch aktive Substanz (bzw. das katalytisch aktive Substanzgemisch) abzutrennen. Vielmehr gestattet es diese besonders bevorzugte Ausführungsform, die fluide mit Wasserstoff beladene Mischung bei Umgebungstemperatur unbegrenzt zu lagern, und die Wasserstofffreisetzung allein durch Variation der Temperatur zu steuern. Es handelt sich somit um ein technologisch sehr effizient und kostengünstig einsetzbares reversibles Wasserstoff-Speichersystem, das dadurch gekennzeichnet ist, dass die mono- oder bidentaten katalytisch aktiven Substanzen auch bei der Regenerierung der Speichersubstanz und bei der Lagerung der mit Wasserstoff beladenen Speichersubstanz in Kontakt mit der Speichersubstanz verbleiben.

Die erfindungsgemäße Ausführung der Erfindung ist nachfolgend anhand von Ausführungsbeispielen erläutert, wobei die Erfindung alle nachfolgend aufgeführten bevorzugten Ausführungsbeispiele einzeln und in Kombination miteinander umfasst. Insbesondere stellen sämtliche aufgeführten Ausführungsbeispiele keine Beschränkung der Erfindung dar; vielmehr sind alle dem Fachmann naheliegenden weiteren Ausführungsbeispiele vom Umfang der Erfindung sowie ihren Äquivalenten umfasst.

### Kurze Beschreibung der Zeichnungen

In den Zeichnungen wird Aminoboran in den Beschriftungen im Allgemeinen als "AB" abgekürzt. Die Zeichnungen zeigen im Einzelnen:

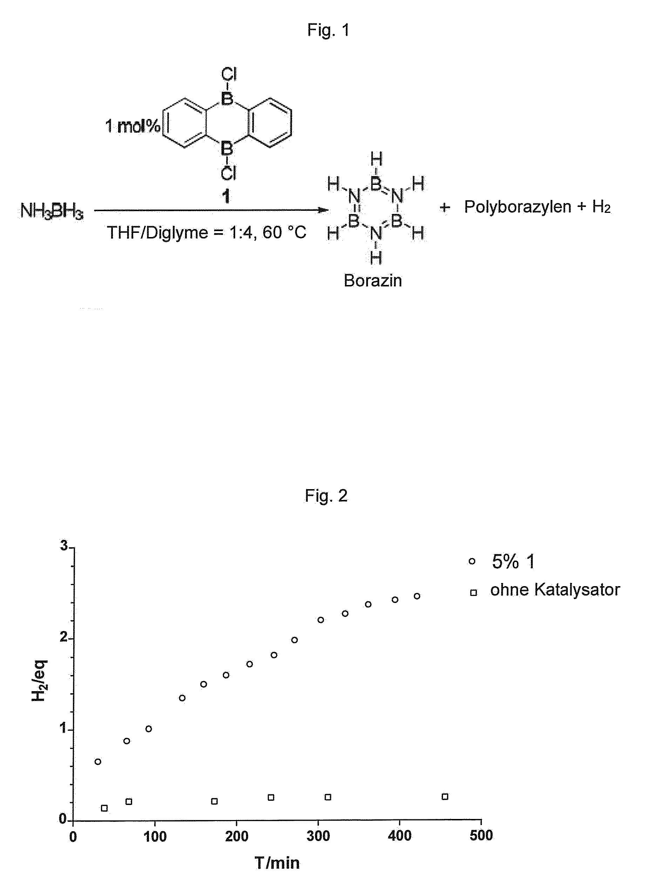

- Fig. 1: Beispielhaftes Formelschema der Freisetzung von Wasserstoff aus Aminoboran unter Verwendung der katalytisch aktiven Substanz **1**
- Fig. 2: Vergleichende Darstellung der Freisetzung von Wasserstoff aus Aminoboran in THF/Diglyme (1/4) bei 60 °C mit und ohne katalytisch aktiver Substanz
- Fig. 3: Tabellarische Zusammenstellung der Versuchsparameter und Ergebnisse der Ausführungs- und Vergleichsbeispiele
- Fig. 4: Zusammenstellung der untersuchten mono- und bidentaten katalytisch aktiven Substanzen
- Fig. 5A: ¹H-NMR-Spektren einer Mischung von einem Äquivalent **1** und drei Äquivalenten Aminoboran in THF-d₈ bei 50 °C nach unterschiedlichen Reaktionszeiten
- Fig. 5B: ¹¹B-NMR-Spektren einer Mischung von einem Äquivalent **1** und 20 Äquivalenten Aminoboran in einer THF/Diglyme-Mischung (1:2) bei 60 °C nach unterschiedlichen Reaktionszeiten
- Fig. 6: Graphische Darstellung der Abnahme von Aminoboran in einer THF/Diglyme-Mischung (1:2) bei 60 °C, beobachtet mit Hilfe von ¹¹B-NMR-Spektroskopie
- Fig. 7: Graphische Darstellung des zeitlichen Verlaufs der Freisetzung von Wasserstoff aus Aminoboran bei unterschiedlichen Anfangskonzentrationen Aminoboran und einheitlich fester Konzentration katalytisch aktiver Substanz von 0,0065 mol·L⁻¹ in einer THF/Diglyme-Mischung bei 60 °C
- Fig. 8: Graphische Auftragung des natürlichen Logarithmus der Geschwindigkeitskonstanten k_{AB} gegen den natürlichen Logarithmus der Konzentration von Aminoboran zur Bestimmung der Reaktionsordnung in Bezug auf Aminoboran
- Fig. 9: Graphische Darstellung des zeitlichen Verlaufs der Freisetzung von Wasserstoff aus Aminoboran bei unterschiedlichen Konzentrationen der katalytisch aktiven Substanz **1** und einheitlich fester Konzentration von 0,13 mol·L⁻¹ Aminoboran in einer THF/Diglyme-Mischung bei 60 °C
- Fig. 10: Graphische Auftragung des natürlichen Logarithmus der Geschwindigkeitskonstanten k_{Kat} gegen den natürlichen Logarithmus der Konzentration von katalytisch aktiver Substanz **1** zur Bestimmung der Reaktionsordnung in Bezug auf die katalytisch aktive Substanz **1**
- Fig. 11: Graphische Darstellung des Reaktionsverlaufs in Abhängigkeit vom Isotopen-Substitutionsmuster des Aminoborans anhand des zeitlichen Verlaufs der Eduktkonzentration (Ansatz: jeweils 0,25 mol·L⁻¹ isotopomeres Aminoboran in Gegenwart von 5 mol-% **1** bei 60 °C in THF/Diglyme-Mischung)
- Fig. 12: Formelschema der Abfangreaktion mit Cyclohexen
- Fig. 13: Graphische Darstellung der Wiederverwendbarkeit der katalytisch aktiven Substanz **1** in wiederholten Reaktionszyklen bei der Dehydrogenierung von Aminoboran (4 Zyklen).
- Fig. 13 B: Graphische Darstellung der Wiederverwendbarkeit der katalytisch aktiven Substanz **1** in wiederholten Reaktionszyklen bei der Dehydrogenierung von Amminboran (15 Zyklen).
- Fig. 14: Graphische Darstellung der Ergebnisse des Start/Stop-Experiments mit katalytisch aktiver Substanz **1** und Aminoboran bei einer Konzentration von c_{AB}= 0,13 M. In den mit "a" überschriebenen schraffierten Bereichen beträgt die Reaktionstemperatur 60 °C, in den nicht schraffierten mit "b" überschriebenen Bereichen beträgt die Reaktionstemperatur Raumtemperatur.
- Fig. 15: Graphische Darstellung der Ergebnisse des Start/Stop-Experiments mit katalytisch aktiver Substanz **1** und Amminboran bei einer Konzentration von c_{AB}= 0,25 M. In den mit "a" überschriebenen schraffierten Bereichen beträgt die Reaktionstemperatur 60 °C, in den nicht schraffierten mit "b" überschriebenen Bereichen beträgt die Reaktionstemperatur Raumtemperatur.
- Fig. 16: Graphische Darstellung der Ergebnisse des Start/Stop-Experiments mit katalytisch aktiver Substanz **1** und Amminboran bei einer Konzentration von c_{AB}= 0,35 M. In den mit "a" überschriebenen schraffierten Bereichen beträgt die Reaktionstemperatur 60 °C, in den nicht schraffierten mit "b" überschriebenen Bereichen beträgt die Reaktionstemperatur Raumtemperatur.
- Fig. 17: Graphische Darstellung der Ergebnisse des Start/Stop-Experiments mit katalytisch aktiver Substanz **1** und Amminboran bei einer Konzentration von c_{AB}= 0,5 M. In den mit "a" überschriebenen schraffierten Bereichen beträgt die Reaktionstemperatur 60 °C, in den nicht schraffierten mit "b" überschriebenen Bereichen beträgt die Reaktionstemperatur Raumtemperatur.
- Fig. 18: Graphische Darstellung der Ergebnisse des Start/Stop-Experiments mit katalytisch aktiver Substanz **1** und Amminboran bei einer Konzentration von c_{AB}= 1,0 M. In den mit "a" überschriebenen schraffierten Bereichen beträgt die Reaktionstemperatur 60 °C, in den nicht schraffierten mit "b" überschriebenen Bereichen beträgt die Reaktionstemperatur Raumtemperatur.

### Ausführungsbeispiele

Nachfolgend wird die Erfindung anhand einiger Ausführungsbeispiele im Labormaßstab näher erläutert. Es ist für den Fachmann ohne weiteres ersichtlich, dass sich die Erfindung auch auf die Durchführung im Technikums- und Produktionsmaßstab unter Verwendung entsprechender dafür geeigneter Geräte, Materialien und Prozessparameter erstreckt.

Der erfindungsgemäße Katalysator wird jeweils in Anteilen von 0,1 Prozent bis 10 Prozent, bezogen auf die eingesetzte Menge Aminoboran, in einem geeigneten Lösungsmittel mit Aminoboran in Kontakt gebracht und die so erhaltene Reaktionsmischung anschließend auf eine Temperatur erhitzt, bei der die Reaktion mit der gewünschten Geschwindigkeit abläuft. Bevorzugt wird auf eine Temperatur von 30 °C bis 200 °C erhitzt, besonders bevorzugt auf eine Temperatur von 40 °C bis 150 °C, und ganz besonders bevorzugt auf eine Temperatur von 50 °C bis 100 °C. In den hier wiedergegebenen Ausführungsbeispielen wurde aus Gründen der Vergleichbarkeit der Ergebnisse untereinander eine einheitliche Reaktionstemperatur von 60 °C ausgewählt.

Die Versuche wurden teilweise mit Amminboran in kristalliner Form und teilweise mit Amminboran in amorpher Form durchgeführt. Als kristallines Pulver wurde Amminboran in den Versuchen Nr. 1 bis 15 eingesetzt, als amorphes Pulver in den Versuchen Nr. 16 bis 21 (Tab. 1), wobei der Vergleich zwischen Versuch Nr. 1 und Versuch Nr. 21 den Einfluß der Kristallinität des Amminborans auf die Umsetzung zeigt.

Üblicherweise wird die thermische Abspaltung von Wasserstoff aus Aminoboran unter Verwendung der erfindungsgemäßen Katalysatoren in einem geschlossenen System (Reaktionsgefäß) durchgeführt, das mindestens eine Vorrichtung umfasst, um das entwickelte Wasserstoffgas einer Meß- oder Verbrauchsvorrichtung zuzuführen. Als Reaktionsgefäß diente für die Ausführungsbeispiele ein sogenanntes Schlenk-Rohr, als Meßvorrichtung wurde eine umgedrehte Bürette als Eudiometer verwendet, um die in einem definierten Zeitraum freigesetzte Menge Wasserstoffgas zu bestimmen.

Als Lösungsmittel, bzw. Reaktionsmedium, wurde im Rahmen der Ausführungsbeispiele eine Mischung von Tetrahydrofuran ("THF") und Diethylenglykoldimethylether ("Diglyme") im Verhältnis 1:4 oder 1:2 verwendet. Es ist für den Fachmann ohne weiteres ersichtlich, dass jedes beliebige andere Lösungsmittel oder Lösungsmittelgemisch mit polar-aprotischen Eigenschaften ebenfalls vorteilhaft verwendet werden kann, ohne den Umfang der Erfindung oder ihrer Äquivalente zu verlassen. Insbesondere sind weiterhin Lösungsmittel und Lösungsmittelgemische geeignet, deren Dampfdruck niedriger ist als die Dampfdrucke der im Rahmen der Ausführungsbeispiele verwendeten Lösungsmittelmischungen. Das hat den Vorteil, dass das sich entwickelnde Wasserstoffgas unter Umständen weniger aufwendig von mitgerissenen Lösungsmitteldämpfen befreit werden muß.

Es ist für den Fachmann weiterhin naheliegend und ohne weiteres ersichtlich, dass die erfindungsgemäße Verwendung der erfindungsgemäßen Substanzen sowohl in gelöster Form, also homogen-katalytisch, als auch in ungelöster Form, d.h. heterogen-katalytisch erfolgen kann. Bei der heterogen-katalytischen Verwendung kann die Zweiphasigkeit des Reaktionsmediums sowohl dadurch erreicht werden, dass ein Lösungsmittel verwendet wird, in dem die katalytisch aktive Substanz nicht oder nur wenig löslich ist, als auch dadurch, dass die katalytisch aktive Substanz entweder kovalent oder adsorptiv an ein unlösliches Trägermaterial gebunden wird. Im Falle der Homogenkatalyse kann darüber hinaus auch die Wasserstoff-Speichersubstanz in suspendierter, das heißt mindestens teilweise ungelöster Form vorliegen, wodurch sich ebenfalls eine prinzipiell heterogenkatalytische Ausführungsvariante ergibt.

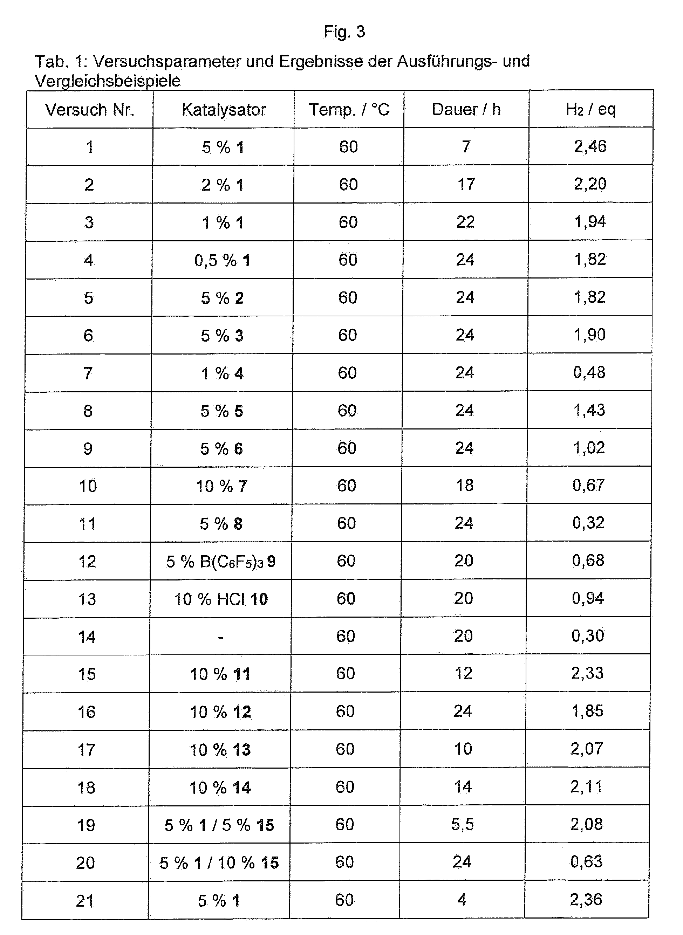

In Tabelle 1 (Fig. 3) sind die Versuchsparameter und Ergebnisse der vorgestellten Ausführungs- und Vergleichsbeispiele zusammengestellt. Die Ergebnisse sind als freigesetzte Menge Wasserstoff angegeben, in Form von "Äquivalente freigesetzter Wasserstoff pro Formel-Äquivalent Aminoboran" ("H₂/eq").

Neben den erfindungsgemäß verwendeten Verbindungen **1, 2, 3, 4, 5, 6, 11, 12, 13, 14** und **15** wurden auch Vergleichsversuche mit den bekannten Verbindungen **7, 8, 9** und **10** sowie ohne katalytisch aktive Substanz durchgeführt (vgl. Fig. 3 und Fig. 4). Die Ergebnisse in Tabelle 1 zeigen, dass die erfindungsgemäße Verwendung der Substanzen **1** bis **6** (Versuche Nr. 1 bis 9) und **11** bis **15** (Versuche Nr. 15 bis 20) mehrheitlich eine deutlich höhere Freisetzung von Wasserstoff ermöglichen als im Stand der Technik bekannte Verbindungen.

Weiterhin wurden Versuche durchgeführt, die zeigen, dass es durch Kombination mehrerer erfindungsgemäßer katalytisch aktiver Substanzen möglich ist, Substanzgemische herzustellen, die eine gezielt einstellbare katalytische Aktivität aufweisen. Dazu wurden Mischungen aus **1** und LiHBEt₃ hergestellt, indem 3,2 mg (0,013 mmol / 1,0 eq) **1** bei Raumtemperatur mit 13 µL (Molverhältnis 1:1) bzw. 26 µL (Molverhältnis 1:2) einer 1 M-Lösung von LiHBEt₃ in THF versetzt, und über Nacht, also 5 bis 15 Stunden, gerührt wurden. Anschließend wurden alle flüchtigen Bestandteile durch Anlegen von Vakuum entfernt und der verbliebene Rückstand als katalytisch aktive Substanzmischung in Versuchen zur Freisetzung von Wasserstoff verwendet. Die Ergebnisse der entsprechenden Versuche 19 (Molverhältnis 1:1) und 20 (Molverhältnis 1:2) sind aus Tabelle 1 ersichtlich.

Die Versuche Nr. 16 bis 18 in Tabelle 1 zeigen die Ergebnisse der beispielhaft mit den monodentaten Substanzen **12, 13** und **14** durchgeführten Versuche, die überraschenderweise deutlich bessere Ergebnisse aufweisen als im Stand der Technik bekannte monodentate Verbindungen.

### Vorteile der Erfindung

Gewerblich anwendbare Vorteile der Erfindung sind zum einen die Freisetzung sehr großer Mengen (bis zu ca. 2,5 Äquivalente Wasserstoff pro Formeläquivalent Aminoboran) sowie die Freiheit von Übergangsmetallen. Letzteres bietet zum einen finanzielle Vorteile gegenüber edelmetallhaltigen Katalysatoren, zum anderen ist die Vermeidung von Übergangsmetallen oftmals auch ein höchst relevanter ökologischer Vorteil, insbesondere in der Anwendung bei mobilen Systemen.

Ein weiterer Vorteil der Verwendung von insbesondere borhaltigen katalytisch aktiven Substanzen für die thermische Freisetzung von Wasserstoff aus Aminoboran besteht darin, dass durch die katalytisch aktive Substanz keine weiteren katalytisch aktiven Elemente eingeführt werden, sondern lediglich solche katalytisch aktiven Elemente (Bor), die im Speichersystem bereits vorhanden sind. Das Gesamtsystem ist daher in seiner elementaren Zusammensetzung weniger heterogen aufgebaut als die im Stand der Technik bekannten Systeme und daher nach Ende der Gebrauchsdauer einfacher recyclierbar.

Weiterhin ist es ein besonderer Vorteil der Erfindung, dass die erfindungsgemäße katalytisch aktive Substanz zur Freisetzung von Wasserstoff aus der Wasserstoffspeichersubstanz für eine Unterbrechung der Freisetzung von Wasserstoff nicht von der Wasserstoffspeichersubstanz abgetrennt werden muss.

## Patentansprüche

1. Verwendung von Substanzen, enthaltend mindestens ein Bor-Atom, wobei die mindestens ein Bor-Atom enthaltenden Substanzen monodentate und bidentate Substanzen umfassen, als katalytisch aktive Substanzen bei der thermischen Freisetzung von Wasserstoff aus Wasserstoffspeichersubstanzen, **dadurch gekennzeichnet dass** das mindestens eine Bor-Atom mindestens eine direkte kovalente Bindung zu mindestens einem Substituenten R aufweist, der gegenüber dem mindestens einen Bor-Atom elektronenziehend wirkt und dadurch die Lewis-Acidität des mindestens einen Bor-Atoms verstärkt, wobei der mindestens eine Substituent R unabhängig ausgewählt ist aus der Liste umfassend H, F, Cl, Br, J, -CN, -OCN, -SCN, -OEt -OMe, -C₆F₅, -OCX₃, -CX₃, -C₂X₅, -C₃X₇, -C₆X₄CX₃, -C₆X₃(CX₃)₂, -C₆X₂(CX₃)₃, wobei X unabhängig voneinander ausgewählt ist aus der Liste umfassend H, F, Cl, Br, J, -CN, -OCN, -SCN, -OC₂Y₅, -OCY₃ und Y unabhängig voneinander ausgewählt ist aus der Liste umfassend H, F, Cl, Br, J, -CN, -OCN.

2. Verwendung von bidentaten Substanzen gemäß Anspruch 1 als katalytisch aktive Substanzen bei der thermischen Freisetzung von Wasserstoff aus Wasserstoffspeichersubstanzen, **dadurch gekennzeichnet dass** ihre Struktur der allgemeinen Formel 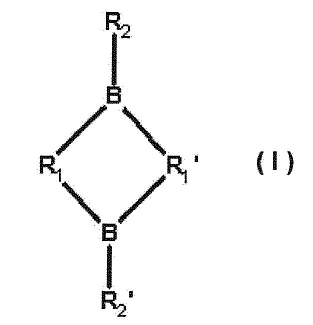 entspricht, wobei es sich bei den Resten R₂ und R₂' um zwei gleiche oder verschiedene Substituenten R gemäß Anspruch 1 handelt, und R₁ und R₁' zwei gleiche oder verschiedene bifunktionale organische Reste sind, die die beiden Bor-Atome überbrückend miteinander verbinden und unabhängig voneinander ausgewählt sind aus der Liste umfassend die bifunktionalen Liganden 1,2-Phenylen, 2,3-Naphthylen und 2,3-Anthrylen.

3. Verwendung von bidentaten Substanzen gemäß Anspruch 1 als katalytisch aktive Substanzen bei der thermischen Freisetzung von Wasserstoff aus Wasserstoffspeichersubstanzen, **dadurch gekennzeichnet dass** ihre Struktur der allgemeinen Formel 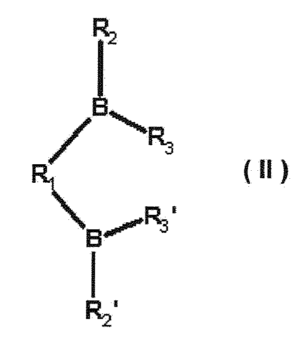 entspricht, wobei es sich bei den Resten R₂, R₂', R₃ und R₃' um vier gleiche oder verschiedene Substituenten R gemäß Anspruch 1 handelt, und R₁ ein bifunktionaler organischer Rest ist, der die beiden Bor-Atome miteinander verbindet und ausgewählt ist aus der Liste umfassend die bifunktionalen Liganden 1,2-Phenylen, 2,3-Naphthylen und 2,3-Anthrylen.

4. Verwendung von monodentaten Substanzen gemäß Anspruch 1, **dadurch gekennzeichnet dass** ihre Struktur der allgemeinen Formel 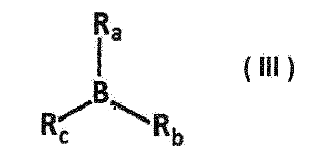 entspricht, wobei es sich bei mindestens einem der drei Substituenten Rₐ, R_{b} und R_{c} um einen elektronenziehenden Substituenten R gemäß Anspruch 1 handelt, und die Substituenten Rₐ, R_{b} und R_{c} unabhängig voneinander ausgewählt werden.

5. Verwendung von Substanzen nach einem der Ansprüche 1 bis 4 bei der Freisetzung von Wasserstoff aus Aminoboran (NH₃BH₃).

6. Verwendung von Substanzen nach einem der Ansprüche 1 bis 4 bei der Freisetzung von Wasserstoff aus einem substituierten Aminoboran, wobei das substituierte Aminoboran ausgewählt ist aus der Liste umfassend die substituierten Aminoborane Methylaminoboran, Dimethylaminoboran, Ethylaminoboran, Diethylaminoboran und Methylethylaminoboran.

7. Verwendung von Substanzen gemäß einem der Ansprüche 1 bis 4 in einem mehrphasigen Reaktionsmedium.

8. Verwendung von Substanzen gemäß einem der Ansprüche 1 bis 4 in einem einphasigen Reaktionsmedium.

9. Verwendung von Substanzen gemäß mindestens einem der vorausgegangenen Ansprüche 1 bis 8 in einem polar-aprotischen Lösungsmittel oder einem polar-aprotischen Lösungsmittelgemisch.

10. Verwendung von Substanzen gemäß Anspruch 9, **dadurch gekennzeichnet, dass** das Lösungsmittelgemisch mindestens ein Lösungsmittel enthält, das ausgewählt ist aus der Liste umfassend die Lösungsmittel Tetrahydrofuran, Diethylenglykoldimethylether, Triethylenglykoldimethylether und 1,4-Dioxan.

11. Verwendung von Substanzen gemäß mindestens einem der Ansprüche 1 bis 10 in einem ortsfesten oder mobilen System zur Speicherung von Wasserstoff.

12. Verwendung von Substanzen gemäß Anspruch 11, **dadurch gekennzeichnet, dass** die Substanzen auch bei der Regenerierung der Speichersubstanz in Kontakt mit der Speichersubstanz verbleiben.

13. Verwendung von Substanzen gemäß Anspruch 11, **dadurch gekennzeichnet, dass** die Substanzen auch bei der Lagerung der mit Wasserstoff beladenen Speichersubstanz in Kontakt mit der Speichersubstanz verbleiben.

14. Verfahren gemäß mindestens einem der vorangegangenen Ansprüche 1 bis 13 für die thermische Freisetzung von Wasserstoff aus Wasserstoffspeichersubstanzen, **dadurch gekennzeichnet dass** mindestens eine katalytisch aktive Substanz in einem geeigneten Lösungsmittel oder Lösungsmittelgemisch in Kontakt mit mindestens einer Wasserstoffspeichersubstanz gebracht wird, wobei die Freisetzung von Wasserstoff durch Variation der Reaktionstemperatur gesteuert oder geregelt wird.
